# EUROPÄISCHE PATENTSCHRIFT

(11) **EP 0 827 723 B1**
(45) Veröffentlichungstag und Bekanntmachung des Hinweises auf die Patenterteilung: **09.03.2005**
(21) Anmeldenummer: 97114610.5
(22) Anmeldetag: 22.08.1997
(51) Int. Cl.: A61C 19/00, B29C 35/08

(54) **Verfahren und Vorrichtung zum Aushärten von lichtempfindlichen polymeren Zusammensetzungen**
Method and device for the curing of light sensitive polymer compositions
Méthode et dispositif destinés à la polymérisation de compositions polymères sensibles à la lumière

(30) Priorität: 06.09.1996 DE 19636266
(43) Veröffentlichungstag der Anmeldung: 11.03.1998
(73) Patentinhaber: Kaltenbach & Voigt GmbH & Co. KG, 88400 Biberach/Riss (DE)
(72) Erfinder: Eibofner, Eugen, 88400 Biberach / Riss (DE); Strohmaier, Ernst, 88427 Bad Schussenried (DE)
(74) Vertreter: Schmidt-Evers, Jürgen, Dipl.-Ing.

(56) Entgegenhaltungen:
- EP-A- 0 003 312
- EP-A- 0 037 461
- EP-B- 0 780 104
- WO-A-95/07731
- DE-A- 3 411 994
- FR-A- 2 348 227
- FR-A- 2 629 999

## Beschreibung

Die Erfindung betrifft ein Verfahren zum Aushärten von lichtempfindlichen polymeren Zusammensetzungen, sowie eine Vorrichtung zur Durchführung dieses Verfahrens.

Lichtempfindliche polymere Zusammensetzungen der hier betrachteten Art finden beispielsweise in der Zahnmedizin zur Herstellung von Zahnfüllungen, Zahnklebungen, Zahnversiegelungen oder dergleichen Anwendung. Die in der Zahnmedizin verwendeten Kunststoff-Komposite können in der Regel durch eine Bestrahlung mit Licht einer Wellenlänge von etwa 400 bis 550 nm ausgehärtet bzw. polymerisiert werden.

Neben der zahnmedizinischen Behandlung direkt am Patienten kann ein solches Verfahren beispielsweise auch im Laborbereich zur Bearbeitung von Zahnprothesen, Zahnersatz, oder ähnlichem angewendet werden. Im Prinzip ist das Verfahren immer dann anwendbar, wenn eine lichtempfindliche polymere Zusammensetzung mittels Photo-Polymerisation auszuhärten ist.

Eine Vorrichtung zur Durchführung des eingangs genannten Photo-Polymerisationsvorganges ist in dem deutschen Gebrauchsmuster DE-GM 90 17 070.9 offenbart. Darin wird eine regelbare Lichtabgabeeinrichtung, insbesondere zum Aushärten von lichtempfindlichen Dentalwerkstoffen beschrieben, die eine Lichtquelle und eine Lichtleiteroptik enthält. Um die Lichtintensität der Lichtabgabeeinrichtung konstant auf definierten Werten zu halten, weist die Vorrichtung einen Detektor zur Messung der Lichtintensität und eine Regeleinheit zur Konstanthaltung der Lichtintensität auf.

Ferner werden in einem Firmenprospekt (Demetron-Programm) der Firma KERR GmbH, Karlsruhe auf den Seiten 4-6 verschiedene Licht-Polymerisationsgeräte vorgestellt. Die Handgeräte enthalten eine Halogenlampe mit einer maximalen Leistung im Wellenlängen-Bereich von 400 bis 525 nm, eine Dauerkühlung, einen abnehmbaren, sterilisierbaren Lichtleiter und einen Vorwahlschalter für Aushärtungszeiten bis zu 60 Sekunden bzw. einen fortlaufenden Arbeitsgang.

Weitere Polymerisationsgeräte sind in einem Firmenprospekt der Firma DENTLSPLY DeTrey, Konstanz enthalten. Die bekannten Handgeräte dieses Firmenprospektes enthalten neben den üblichen Komponenten Lichtquelle für 400-500 nm, Lichtleiteroptik, Kühlvorrichtung und Filter einen Mikroprozessor zur Steuerung konstanter Lichtintensität und eine Eingabeeinheit zur Eingabe der Bestrahlungsdauer durch den Benutzer mit einer Anzeigeeinheit zur Anzeige der eingestellten Bestrahlungsdauer.

Ferner ist auch aus der FR 2 629 999 A1 eine Vorrichtung zur Polymerisation von lichtempfindlichen Zusammensetzungen bekannt, die eine Lichtquelle, eine Lichtleiteroptik zum Führen des von der Lichtquelle abgegebenen Lichts eine Steuereinheit zu Steuerung der von der Lichtquelle abgegebenen Lichtintensität sowie ein spektrales Filtersystem aufweist, welches für eine Wellenlänge des Lichts zwischen 400 und 550 nm durchlässig ist.

Bei dem oben genannten Stand der Technik erfolgt die Photo-Polymerisation bei konstanter Lichtintensität und fester Wellenlänge, variiert wird nur die Bestrahlungsdauer, also die Aushärtezeit. Versuche haben gezeigt, daß bei einer Bestrahlung der in der Praxis verwendeten Kunststoff-Komposite mit einer relativ großen Lichtintensität über eine relativ kurze Bestrahlungsdauer, wie es nach dem allgemeinen Stand der Technik üblich ist, zum einen die Aushärtung ungleichmäßig erfolgt, insbesondere tiefere Bereiche weniger aushärten und zum anderen der noch pastöse Kunststoff schrumpft. Dadurch wird im Kunststoff eine ungleichmäßige Bindung der Kunststoffpartikel untereinander und mit der Wandung einer Kavität erzeugt, was eine Verminderung der Qualität und der Lebensdauer von z.B. Zahnfüllungen zur Folge hat.

Ziel der Erfindung ist es, ein Verfahren und eine zur Durchführung des Verfahrens geeignete Vorrichtung zu schaffen, die oben genannten Nachteil beseitigt und eine gleichmäßigere Photo-Polymerisation des Kunststoffes bewirkt.

Diese Aufgabe wird durch ein Verfahren mit den Merkmalen des Anspruches 1 gelöst. Durch die kontinuierliche oder stufenförmige Anhebung der Lichtintensität während des Bestrahlungsvorganges wird eine intensivere und gleichmäßigere Aushärtung bei gleichzeitig geringerer Schrumpfung des Kunststoffes erreicht, was zu einer besseren Bindung der Kunststoffpartikel untereinander und mit der Wandung einer Kavität führt. Zur handhabungsfreundlichen Bedienung des Geräts wird dabei vor dem Bestrahlungsvorgang über eine Eingabeeinheit die Bestrahlungsdauer vorgegeben.

Weiter wird die Aufgabe durch eine Vorrichtung mit den Merkmalen des Anspruches 8 gelöst. Die Steuereinheit der erfindungsgemäßen Vorrichtung erlaubt eine kontinuierliche oder stufenförmige Anhebung der Lichtintensität während eines Bestrahlungsvorganges, so daß das erfindungsgemäße Verfahren problemlos durchgeführt werden kann.

Das Anheben der Lichtintensität während des Bestrahlungsvorganges ist zwar bereits aus der EP 0 780 104 A2 bekannt, diese Schrift wurde allerdings erst nach dem Prioritätstag der vorliegenden Anmeldung veröffentlicht und offenbart alle Verfahrensschritte des verfahrensanspruchs 1, bis auf den Schritt, daß die Bestrahlungsdauer bereits vor dem Bestrahlungsvorgang vorzugeben ist.

In Weiterbildung der Erfindung kann der Benutzer über die Eingabeeinheit zwischen verschiedenen Bestrahlungsmodi wählen, nämlich zwischen einer Bestrahlung mit konstanter Lichtintensität oder mit kontinuierlich oder stufenförmig ansteigender Lichtintensität.

Weiter kann der gewählte Bestrahlungsmodus zusammen mit der eingestellten bzw. verbleibenden Bestrahlungsdauer in einer Anzeigeeinheit angezeigt werden.

Vorteilhafterweise kann der Benutzer mit Hilfe eines Pilotlichtstrahles den Lichtstrahl für die Bestrahlung vor dem eigentlichen Bestrahlungsvorgang auf die auszuhärtende Stelle ausrichten. Verwendet man als Pilotlichtstrahl einen Lichtstrahl von reduzierter Lichtintensität, so kann dieser auch für eine manuell steuerbare, langsamst beginnende Aushärtung genutzt werden.

Weitere Ausgestaltungen und Weiterbildungen der Erfindung sind Gegenstand weiterer Unteransprüche.

Anhand der beigefügten Zeichnung wird im folgenden ein Ausführungsbeispiel einer erfindungsgemäßen Vorrichtung und des damit durchführbaren Verfahrens erklärt. Es zeigen:
- Fig. 1: ein erfindungsgemäßes Photo-Polymerisationsgerät im Schnitt;
- Fig. 2: ein Blockschaltbild der elektronischen Schaltung des Photo-Polymerisationsgerätes gemäß Fig, 1;
- Fig. 3: ein Lichtintensität - Zeit - Diagramm zur Veranschaulichung der verschiedenen Bestrahlungsmodi des Photo-Polymerisationsgerätes; und
- Fig. 4: zwei Diagramme zum Vergleich der Polymerisationsergebnisse gemäß einem herkömmlichen und einem erfindungsgemäßen Verfahren.

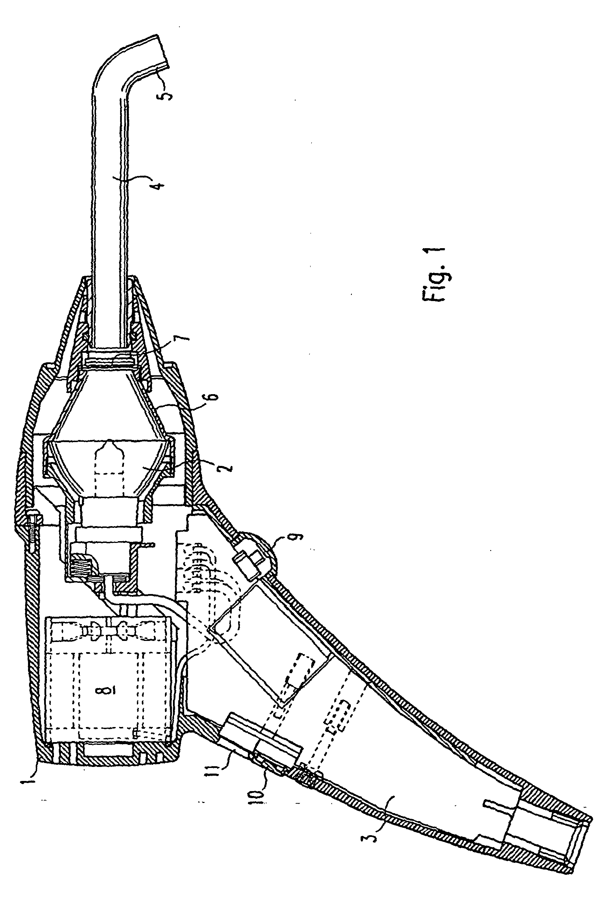

In Fig. 1 ist ein erfindungsgemäßes Photo-Polymerisationsgerät als Handgerät dargestellt, welches insbesondere im zahnmedizinischen Bereich eingesetzt werden kann. Das Handgerät besteht im wesentlichen aus einem Gehäuse 1 mit darin enthaltener Lichtquelle 2, einem Handgriff 3 und einer Lichtleiteroptik 4. Ein Ende der Lichtleiteroptik 4 steht der Lichtquelle 2 korrespondierend gegenüber und das andere Ende 5 ist zur Lichtabgabe ausgebildet und leicht gekrümmt. Der Lichtleiter kann ein Glasstab sein oder mit üblichem Lichtleitmaterial, wie z.B. Glas-, Quarz- oder Kunststoff-Fasern gefüllt sein.

Als Lichtquelle 2 wird vorzugsweise eine Halogenglühlampe mit einem integrierten Reflektor 6 verwendet. Das von der Halogenglühlampe 2 emittierte Licht wird vom Reflektor 6 durch ein Filtersystem 7 geführt und auf die Eintrittsfläche der Lichtleiteroptik 4 fokussiert. Zu dem Filtersystem 7 gehört üblicherweise auch ein Spektralfilter, der nur für Licht des bevorzugten Wellenlängenbereiches von etwa 400 bis 550 nm durchlässig ist, in dem eine Polymerisation der zumeist eingesetzten Kunststoffe erfolgt, wobei aber prinzipiell auch je nach auszuhärtendem Material ein engerer oder sogar anderer Wellenlängenbereich ausgefiltert werden kann. Hinter der Halogenglühlampe 2 ist als Kühlvorrichtung ein Ventilator 8 in dem Gehäuse 1 angeordnet, um ein Überhitzen der Lampe 2 und des Gerätes, insbesondere bei längeren Betriebszeiten zu verhindern.

An dem Handgriff 3 befindet sich ein Schalter 9 zum Einschalten der Lichtquelle 2. Das Ausschalten der durch Betätigung des Schalters 9 eingeschalteten Lichtquelle 2 kann auf verschiedene Weise geschehen. Die Lichtquelle 2 wird entweder durch ein Zeitschaltglied nach Ablauf einer vorbestimmten Zeitdauer oder durch nochmalige Betätigung des Schalters 9 oder durch Loslassen des seit dem Einschalten festgehaltenen Schalters 9 ausgeschaltet. Das Ende des bestrahlungsvorganges wird dem Benutzer vorzugsweise durch ein akustisches Signal mitgeteilt.

Weiter weist der Handgriff 3 eine Eingabeeinheit 10 und eine Anzeigeeinheit 11 auf. Über die Eingabeeinheit 10 können sowohl die gewünschte Bestrahlungsdauer als auch der Bestrahlungsmodus durch den Benutzer eingegeben werden. Von der Anzeigeeinheit 11 kann der Benutzer die eingestellte bzw. verbleibende Bestrahlungsdauer und den eingestellten Bestrahlungsmodus ablesen.

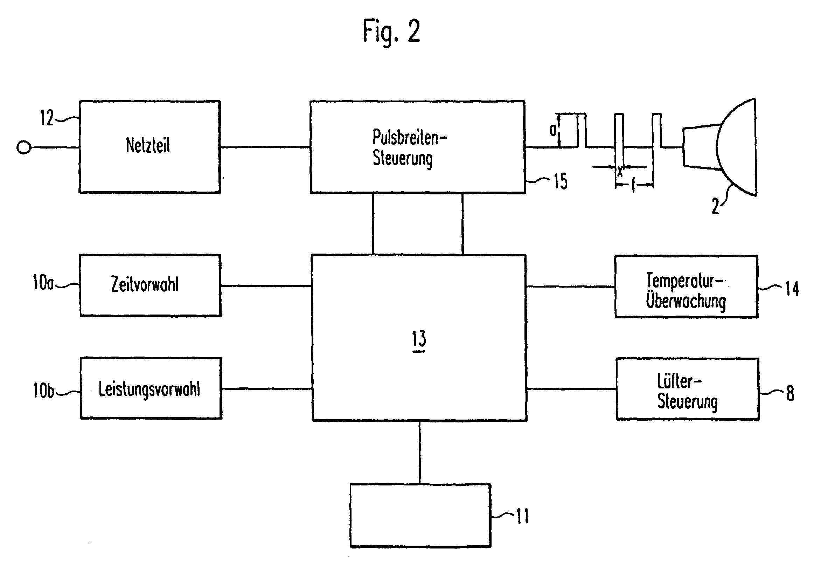

Weitere Einzelheiten des in Fig. 1 dargestellten Photo-Polymerisationsgerätes werden nun anhand des Blockschaltbildes von Fig. 2 erläutert.

Zur Energieversorgung befindet sich im Handgerät ein Netzteil 12, welches über ein Kabel mit einer externen Netzversorgung verbunden ist oder welches Batterien oder Akkumulatoren aufweist. Zentraler Bestandteil der elektronischen Schaltung des Photo-Polymerisationsgerätes ist eine Steuereinheit 13. Die Steuereinheit 13 ist mit der Eingabeeinheit 10 verbunden und empfängt von dieser die vom Benutzer eingegebenen Daten zur Zeitvorwahl 10a und zur Leistungs- bzw. Modusvorwahl 10b. Die über die Eingabeeinheit 10 eingegebenen Nutzerdaten 10a, b werden auf der Anzeigeeinheit 11 angezeigt. Anhand der über die Eingabeeinheit 10 eingegebenen Nutzerdaten 10a, b und der werksseitig vorbestimmten Daten steuert die Steuereinheit 13 die Lichtintensität der Lichtquelle 2 und die Bestrahlungsdauer. Die Bestrahlung erfolgt in der Regel gepulst mit einer Amplitude a, einer Pulsbreite x und einer Pulsrepetitionsfrequenz f, was durch ein mit der Steuereinheit 13 verbundenes Steuerglied 15 eingestellt wird.

Um die tatsächliche, von der Lampe 2 abgegebene Lichtintensität zu kontrollieren, kann zusätzlich ein Detektor zur Messung der Lichtintensität in der Vorrichtung angebracht sein, der mit der Steuereinheit 13 gekoppelt ist, so daß die Steuereinheit 13 die Lichtintensität auf einem konstanten Wert gemäß den eingestellten Nutzerdaten 10b regeln kann.

Die Bestrahlungsdauer wird aufgrund der Zeitvorwahl 10a gesteuert; dabei hat der Benutzer im allgemeinen die Auswahl zwischen kontinuierlichem Betrieb (Ein- und Ausschalten nur durch den Schalter 9 gesteuert) und einer bestimmten, endlichen Bestrahlungsdauer, die er kontinuierlich eingeben oder aus vorgegebenen Werten auswählen kann. Die üblichen Bestrahlungsdauern der hier behandelten Photo-Polymerisationsgeräte liegen zwischen 10 und 60 Sekunden.

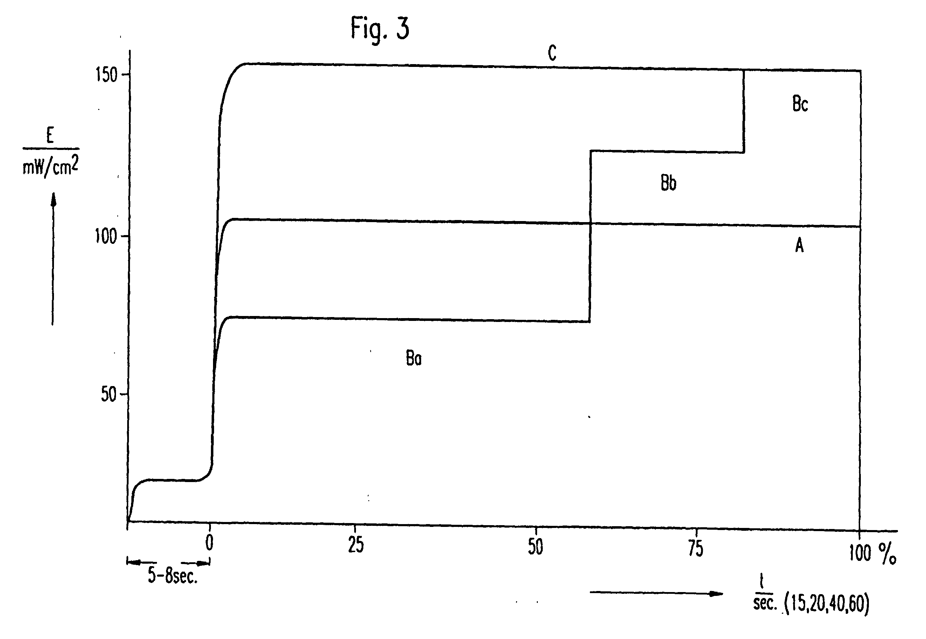

Die Wellenlänge der Bestrahlung und die Lichtintensität in den verschiedenen Bestrahlungsmodi sind üblicherweise werksseitig vorgegeben. Der Benutzer kann aber beispielsweise zwischen drei verschiedenen Bestrahlungsmodi A, B und C auswählen, die in Fig. 3 in Form eines Lichtintensität - Zeit - Diagrammes veranschaulicht sind. Dabei ist in Fig. 3 nach rechts die Zeit t in % von der Gesamtbestrahlungsdauer und nach oben die Lichtintensität E in mW/cm² aufgetragen.

Das Diagramm in Fig. 3 zeigt die Lichtintensitäts-Kurven von drei beispielhaft ausgewählten Bestrahlungsmodi A, B und C jeweils für eine Gesamtbestrahlungsdauer von 15, 20, 40 bzw. 60 Sekunden. Der erste Bestrahlungsmodus A bewirkt eine Bestrahlung mit konstanter niedriger Lichtintensität von etwa 100 mW/cm² und der dritte Bestrahlungsmodus C bewirkt eine Bestrahlung mit konstanter hoher Lichtintensität von etwa 150 mW/cm².

Die Kurve B zeigt eine stufenförmige Anhebung der Lichtintensität im zweiten Bestrahlungsmodus, welcher eine Photo-Polymerisation gemäß dem erfindungsgemäßen Verfahren bewirkt. Die erste Stufe Ba der Bestrahlung erfolgt im allgemeinen bei etwa 30-60% der maximalen Lichtintensität der dritten Stufe Bc für bis zu etwa 75% der Gesamtbestrahlungsdauer. Die zweite Stufe Bb der Bestrahlung erfolgt im allgemeinen bei etwa 50-90% der maximalen Lichtintensität der dritten Stufe Bc für etwa 30% der Gesamtbestrahlungsdauer. Die restliche Bestrahlung erfolgt in der dritten Stufe Bc mit maximalen Lichtintensität.

Neben der hier dargestellten dreistufigen Anhebung der Lichtintensität ist prinzipiell auch eine Anhebung mit einer anderen Anzahl von Bestrahlungsstufen oder auch eine kontinuierliche Steigerung der Lichtintensität während des Bestrahlungsvorgangs möglich. Die in diesem Ausführungsbeispiel angegebenen Bestrahlungsmodi A, B und C, insbesondere der erfindungsgemäße Modus B, sowie die Kenndaten für Lichtintensität und Bestrahlungsdauer haben sich in Versuchen an üblichen, in der Zahnmedizin verwendeten, lichtempfindlichen Kunststoffen allerdings als besonders vorteilhaft erwiesen. Diese Einstellungen können aber selbstverständlich an andere Materialien angepasst werden, die evt. in der Zukunft zum Einsatz kommen.

Der ausgewählte Bestrahlungsmodus A, B oder C wird zusammen mit der eingestellten bzw. verbleibenden Bestrahlungsdauer in der Anzeigeeinheit angezeigt. Die Unterscheidung der Modi in der Anzeige kann beispielsweise durch einen kontinuierlich leuchtenden Punkt für Modus A, einen blinkenden Punkt für Modus B und einen nicht vorhandenen Punkt für Modus C neben der angezeigten Bestrahlungsdauer erfolgen.

Vor der Bestrahlung in einem der zur Verfügung stehenden Bestrahlungsmodi A, B oder C wird die Lichtleiteroptik 4 zunächst optimal auf die gewünschte Aushärtestelle ausgerichtet. Dies geschieht mit Hilfe eines sogenannten Pilotlichtstrahles.

Der Pilotlichtstrahl kann beispielsweise von einer zusätzlichen Lichtquelle an dem Handgerät stammen und aus einem eng gebündelten Lichtstrahl, wie zum Beispiel einem Laser-Lichtstrahl, bestehen. Alternativ kann der Pilotlichtstrahl auch einfacher durch etwa 5 bis 10%, vorzugsweise etwa 8%, der maximalen Lichtintensität der vorhandenen Lichtquelle 2 erzeugt werden.

Wird der Schalter 9 an dem Handgerät zum Start des Behandlungsvorganges gedrückt gehalten, bleibt die Lichtintensität auf dem reduzierten Wert konstant. Hierbei kann noch keine Blendung oder Schädigung der Augen des Patienten entstehen. Der Benutzer des Handgerätes kann nun mit Hilfe des erzeugten Pilotlichtstrahles die Lichtleiteroptik 4 optimal auf die Aushärtestelle ausrichten. Löst man den Schalter 9 wieder, so läuft automatisch der vorgewählte Bestrahlungsmodus ab. Die Zeit der Ausrichtung kann auch auf etwa 5 bis 8 Sekunden begrenzt werden, und die Steuereinheit 13 dann automatisch auf die Lichtintensität des entsprechenden Bestrahlungsmodus umschalten. In diesem Fall ist eine zusätzliche akustische Meldung nach Ablauf des Ausrichtungsmodus bzw. zu Beginn des Bestrahlungsmodus sinnvoll.

Das Ende des Bestrahlungsvorganges wird dem Benutzer vorteilhafterweise ebenfalls durch ein akustisches Signal mitgeteilt.

Durch den Ausrichtungsmodus mit reduzierter Lichtintensität läßt sich auch eine langsamst beginnende Aushärtung realisieren. Der Benutzer kann diese manuell durch Gedrückthalten des Schalters 9 steuern.

Die Ausrichtung der Lichtleiteroptik bzw. eine langsamst beginnende Aushärtung mit dem Pilotlichtstrahl reduzierter Lichtintensität ist in Fig. 3 links vom Zeitpunkt t = 0 auf der Achse der Bestrahlungsdauer t für die drei Bestrahlungsmodi A, B und C dargestellt. Die Lichtintensität beträgt etwa 5 bis 10% der maximalen Lichtintensität für etwa 5 bis 8 Sekunden.

In Fig. 2 sind als weitere Komponenten der elektronischen Schaltung noch eine Überwachung 14 der Temperatur, insbesondere der Temperatur der Lichtquelle 2, und eine Ansteuerung der Kühlvorrichtung 8 gemäß der gemessenen Temperatur im Gehäuse 1 bzw. der Lichtquelle 2 mit der Steuereinheit 13 verbunden.

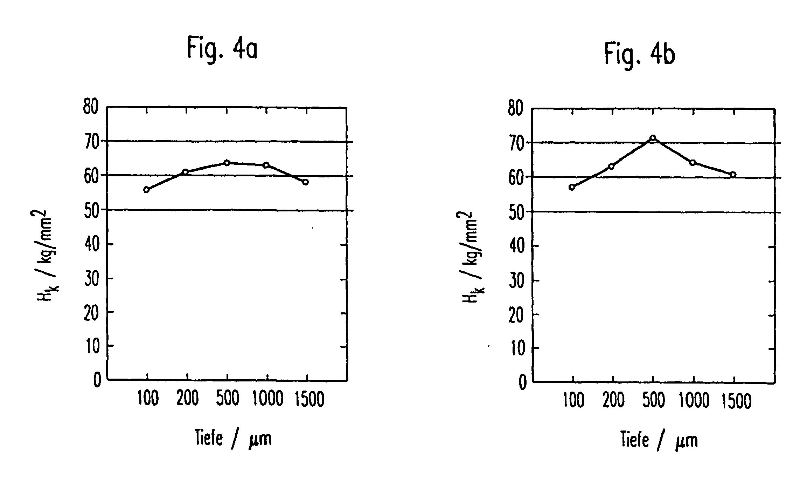

In Fig. 4 sind die Photo-Polymerisationsergebnisse zweier Probekörper, die nach einem herkömmlichen (Fig. 4b) und dem erfindungsgemäßen (Fig. 4a) Verfahren hergestellt wurden, zu Vergleichszwecken gegenübergestellt.

Zur Herstellung der Proben wurde das Füllmaterial (Brilliant Lux, Coltène, Altstätten, Farbe: braun) in normierte Löcher (Durchmesser: 4 mm, Tiefe: 1,9 + 0,1 mm) in Plexiglas eingebracht und mit einer oben beschriebenen Vorrichtung polymerisiert und dann für 10 Tage im Wärmeschrank (T = 37°C) nachgehärtet. Die Probekörper wurden anschließend in kaltpolymerisierendes Kunstharz eingebettet und nach vollständiger Härtung des Harzes mit einer Diamantscheibe unter Glycerinkühlung vertikal durch das Zentrum der Füllung geschnitten. Nun wurden die Proben mit der Schnittfläche nach oben in planparallele Stahlringe eingebettet und in mehreren Polierschritten auf Hochglanz poliert.

Die Erfassung der Polymerisation der Kunststoffproben erfolgte mittels einer Härteprüfung nach Knoop. Der bei der Messung verwendete Diamant wirkte bei jeder Messung während 30 Sekunden mit einer Kraft von 100 Pond auf die Oberfläche ein. Die Knoop'sche Mikrohärte H_{K} wurde an mehreren Proben jeweils in Abständen von 50 µm, 100 µm, 200 µm, 500 µm, 1000 µm und 1500 µm von der Oberfläche gemessen.

In den Fig. 4a und 4b ist jeweils nach rechts die Tiefe bzw. der Abstand von der Oberfläche des Probenkörpers in µm und nach oben jeweils die Knoop'sche Mikrohärte H_{K} in kg/mm² als Maß für den Polymerisationsgrad der Probe aufgetragen.

Fig. 4b zeigt das Ergebniss der Härtemessung an einer Probe, die mit einer Lichtintensität von etwa 140 mW/cm² für etwa 20 Sekunden bestrahlt wurde. Man erkennt deutliche Unterschiede im erzielten Polymerisationsgrad in verschiedenen Abständen von der Oberfläche mit einer maximalen Differenz in der Härte von etwa 15 kg/mm². Die Unterschiede in der Aushärtung werden bei größeren Lichtintensitäten als der hier verwendeten noch verstärkt.

Die Ergebnisse der Härtemessungen an einer Probe, die nach dem erfindungsgemäßen Verfahren in drei Stufen von etwa 78 mW/cm² für 20 Sekunden, 110 mW/cm² für 10 Sekunden und 140 mW/cm² für 10 Sekunden bestrahlt wurde, sind in Fig. 4a dargestellt. Die Kurve von Fig. 4a zeigt einen deutlich gleichmäßigeren Verlauf über die gesamte Tiefe als die der Kurve von Fig. 4b. Die maximale Härte-Differenz beträgt in diesem Fall nur etwa 8 kg/mm², also ungefähr die Hälfte als beim herkömmlichen Verfahren.

Auch wenn in Fig. 4b nach dem herkömmlichen Verfahren eine größere maximale Härte bei einer Tiefe von etwa 500 µm erreicht wird als mit dem erfindungsgemäßen Verfahren, so ist festzustellen, daß für die Qualität des ausgehärteten Kunststoffes die Gleichmäßigkeit der Polymerisation von größerer Bedeutung ist.

Der Bestrahlungsmodus B mit stufenförmiger oder auch kontinuierlicher Anhebung der Lichtintensität stellt eine Verbesserung der herkömmlichen Bestrahlungsmethode mit hoher Lichtintensität und kurzer Bestrahlungsdauer dar, der bei ebenso kurzer Bestrahlungsdauer eine deutlich bessere Qualität des ausgehärteten Kunststoffes erreicht. Ein ähnliches Ergebnis könnte man auch mit niedrigeren Lichtintensitäten als bisher erzielen, wenn man dabei wesentlich längere Bestrahlungszeiten in Kauf zu nehmen bereit ist.

Die obige Beschreibung des erfindungsgemäßen Verfahrens ist anhand eines Ausführungsbeispieles einer entsprechenden Vorrichtung auf den Bereich der Zahnmedizin ausgerichtet. Dabei kann das Verfahren sowohl direkt am Patienten zur Zahnbehandlung als auch im Laborbereich zur Vorbereitung einer Zahnbehandlung oder zu Versuchszwecken angewendet werden. Es ist außerdem denkbar, das Verfahren auch außerhalb der Zahnmedizin anzuwenden; im Prinzip immer dann, wenn eine lichtempfindliche polymere Zusammensetzung mittels Photo-Polymerisation ausgehärtet werden soll. Je nach Anwendungsfall sind dann andere Wellenlängenbereiche, Lichtintensitäten und Bestrahlungszeiten zu wählen als im oben beschriebenen Ausführungsbeispiel.

## Patentansprüche

1. Verfahren zum Aushärten von lichtempfindlichen polymeren Zusammensetzungen wobei eine polymere Zusammensetzung mit Licht bestrahlt wird, dessen Wellenlänge auf die polymere Zusammensetzung abgestimmt ist und im Bereich von 400 bis 500 nm liegt,
**dadurch gekennzeichnet,**
**dass** die Bestrahlung mit kontinuierlich oder stufenförmig steigender Lichtintensität erfolgt,
und **dass** vor dem Bestrahlungsvorgang über eine Eingabeeinheit (10a) die Bestrahlungsdauer vorgegeben wird.

2. Verfahren nach Anspruch 1,
**dadurch gekennzeichnet,**
**daß** die Bestrahlung in drei direkt aufeinanderfolgenden Stufen (Ba, Bb, Bc) mit steigender Lichtintensität erfolgt, wobei die Bestrahlungsdauer der ersten Stufe (Ba) bis zu etwa 75%, die der zweiten Stufe (Bb) etwa 30% und die der dritten Stufe (Bc) die Restzeit der Gesamtbestrahlungsdauer beträgt.

3. Verfahren nach Anspruch 1 oder 2,
**dadurch gekennzeichnet,**
**daß** die Bestrahlung in drei direkt aufeinanderfolgenden Stufen (Ba, Bb, Bc) mit steigender Lichtintensität erfolgt, wobei die Lichtintensität der ersten Stufe (Ba) etwa 30-60% und die der zweiten Stufe (Bb) etwa 50-90% der maximalen Lichtintensität der dritten Stufe (Bc) beträgt.

4. Verfahren nach Anspruch 3,
**dadurch gekennzeichnet,**
**daß** die maximale Lichtintensität der dritten Stufe (Bc) etwa 130 bis 200 mW/cm² beträgt.

5. Verfahren nach einem der vorhergehenden Ansprüche,
**dadurch gekennzeichnet,**
**daß** vor dem Bestrahlungsvorgang der Lichtstrahl mit Hilfe eines Pilotlichtstrahles ausgerichtet wird.

6. Verfahren nach Anspruch 5,
**dadurch gekennzeichnet,**
**daß** der Pilotlichtstrahl von einem Lichtstrahl mit etwa 5 bis 10% der maximalen Lichtintensität erzeugt wird.

7. Verfahren nach Anspruch 5 oder 6,
**dadurch gekennzeichnet,**
**daß** der Pilotlichtstrahl von einer zusätzlichen Lichtquelle des Bestrahlungsgerätes erzeugt wird.

8. Vorrichtung zur Durchführung des Verfahrens nach einem der vorhergehenden Ansprüche,
mit einer Lichtquelle (2),
mit einer Lichtleiteroptik (4, 5) zum Führen des von der Lichtquelle (2) abgegebenen Lichts,
mit einer Steuereinheit (13) zur Steuerung der Steuerung der von der Lichtquelle (2) abgegebenen Lichtleistung und
mit einem spektralen Filtersystem (7), welches für eine Wellenlänge des Lichts der Lichtquelle (2) zwischen 400 und 550 nm durchlässig ist,
**dadurch gekennzeichnet,**
**dass** die von der Lichtquelle (2) abgegebene Lichtintensität durch die Steuereinheit (13) während eines Bestrahlungsvorganges kontinuierlich oder stufenförmig erhöhbar ist,
und **dass** eine Eingabeeinheit (10a) zum Eingeben von Steuerdaten, welche die Bestrahlungsdauer definieren, vorgesehen ist.

9. Vorrichtung nach Anspruch 8,
**dadurch gekennzeichnet,**
**daß** die von der Lichtquelle (2) abgegebene Lichtintensität durch die Steuereinheit (13) in drei direkt aufeinanderfolgenden Stufen (Ba, Bb, Bc) erhöhbar ist, wobei die Bestrahlungsdauer der ersten Stufe (Ba) bis zu etwa 75%, die der zweiten Stufe (Bb) etwa 30% und die der dritten Stufe (Bc) die Restzeit der Gesamtbestrahlungsdauer beträgt.

10. Vorrichtung nach Anspruch 8 oder 9,
**dadurch gekennzeichnet,**
**daß** die von der Lichtquelle (2) abgegebene Lichtintensität durch die Steuereinheit (13) in drei direkt aufeinanderfolgenden Stufen (Ba, Bb, Bc) erhöhbar ist, wobei die Lichtintensität der ersten Stufe (Ba) etwa 30-60% und die der zweiten Stufe (Bb) etwa 50-90% der maximalen Lichtintensität der dritten Stufe (Bc) beträgt.

11. Vorrichtung nach Anspruch 10,
**dadurch gekennzeichnet,**
**daß** die maximale Lichtintensität der dritten Stufe (Bc) etwa 130 bis 200 mW/cm² beträgt.

12. Vorrichtung nach einem der Ansprüche 8 bis 11,
**dadurch gekennzeichnet**
**daß** die Steuereinheit (13) die von der Lichtquelle (2) abgegebene Lichtintensität abhängig von den über die Eingabeeinheit (10a, 10b) eingegebenen Steuerdaten steuert.

13. Vorrichtung nach einem der Ansprüche 8 bis 12,
**dadurch gekennzeichnet,**
**daß** die Steuereinheit (13) die Bestrahlung in verschiedenen, vorgegebenen Bestrahlungsmodi (A, B, C) ermöglicht.

14. Vorrichtung nach Anspruch 13,
**dadurch gekennzeichnet,**
**daß** die Steuereinheit (13) die Bestrahlung in drei verschiedenen Modi (A, B, C) ermöglicht, nämlich einem ersten Modus (A) mit konstanter niedriger Lichtintensität, einem zweiten Modus (B) mit kontinuierlich oder stufenförmig erhöhter Lichtintensität und einem dritten Modus (C) mit konstanter hoher Lichtintensität.

15. Vorrichtung nach Anspruch 13 oder 14,
**dadurch gekennzeichnet,**
**daß** über die Eingabeeinheit (10b) der Bestrahlungsmodus (A, B, C) durch den Benutzer wählbar ist.

16. Vorrichtung nach einem der Ansprüche 13 bis 15,
**dadurch gekennzeichnet,**
**daß** die Vorrichtung eine Anzeigeeinheit (11) zur Anzeige des vom Benutzer eingestellten Bestrahlungsmodus (A, B, C) aufweist.

17. Vorrichtung nach einem der Ansprüche 8 bis 16,
**dadurch gekennzeichnet, daß** die Vorrichtung einen an die Lichtstrahlung angekoppelten Detektor aufweist, der die Lichtintensität mißt und ein entsprechendes elektrisches Signal an eine Regeleinheit liefert, welche ihrerseits die Lichtintensität entsprechend dem aufgenommenen Meßsignal konstant hält.

18. Vorrichtung nach einem der Ansprüche 8 bis 17,
**dadurch gekennzeichnet,**
**daß** die Vorrichtung eine weitere Lichtquelle für einen Pilotlichtstrahl zur Ausrichtung des von der Lichtquelle (2) abgegebenen Lichtstrahles aufweist.

19. Vorrichtung nach einem der Ansprüche 8 bis 17,
**dadurch gekennzeichnet,**
**daß** die von der Lichtquelle (2) abgegebene Lichtintensität durch die Steuereinheit (13) vor dem Bestrahlungsvorgang auf etwa 5 bis 10% der maximalen Lichtintensität steuerbar ist.

## Claims

1. Process for the curing of light-sensitive polymeric compositions, wherein a polymeric composition is irradiated with light the wavelength of which is suited to the polymeric composition and lies in the range from 400 to 500 nm,
**characterized in that**,
the irradiation is effected with continuously or step-wise increasing light intensity,
and **in that** before the irradiation procedure the irradiation duration is predetermined via an input unit (10a).

2. Process according to claim 1,
**characterized in that**,
the irradiation is effected in three steps (Ba, Bb, Bc), directly following one another, with increasing light intensity, wherein the irradiation duration of the first step (Ba) is up to about 75%, that of the second step (Bb) about 30% and that of the third step (Bc) the remainder of the overall irradiation duration.

3. Process according to claim 1 or 2,
**characterized in that**,
the irradiation is effected in three steps (Ba, Bb, Bc), directly following one another, with increasing light intensity, wherein the light intensity of the first step (Ba) is about 30 - 60% and that of the second step (Bb) about 50 - 90% of the maximum light intensity of the third step (Bc).

4. Method according to claim 3,
**characterized in that**,
the maximum light intensity of the third step (Bc) is about 130 to 200 mW/cm².

5. Process according to any preceding claim,
**characterized in that**,
before the irradiation procedure the light beam is aimed with the aid of a pilot light beam.

6. Process according to claim 5,
**characterized in that**,
the pilot light beam is generated from a light beam having about 5 to 10% of the maximum light intensity.

7. Process according to claim 5 or 6,
**characterized in that**,
the pilot light beam is generated from an additional light source of the irradiation apparatus.

8. Device for carrying out the process according to any preceding claim,
having a light source (2),
an optical light guide system (4, 5) for directing the light issued from the light source (2),
having a control unit (13) for control of the controller of the light power output from the light source (2) and
having a spectral filter system (7) which is transparent for a wavelength of the light of the light source (2) between 400 and 550 nm,
**characterized in that**,
the light intensity output from the light source (2) can be increased by means of the control unit (13) during an irradiation procedure continuously or step-wise,
and **in that** there is provided an input unit (10a) for the input of control data which defines the irradiation duration.

9. Device according to claim 8,
**characterized in that**,
the light intensity output from the light source (2) can be increased by means of the control unit (13) in three steps (Ba, Bb, Bc), directly following one another, wherein the irradiation duration of the first step (Ba) is up to about 75%, that of the second step (Bb) about 30% and that of the third step (Bc) the remainder of the overall irradiation duration.

10. Device according to claim 8 or 9,
**characterized in that**,
the light intensity output from the light source (2) can be increased by means of the control unit (13) in three steps (Ba, Bb, Bc), directly following one another, wherein the light intensity of the first step (Ba) is about 30 - 60% and that of the second step (Bb) is about 50 - 90% of the maximum light intensity of the third step (Bc).

11. Device according to claim 10,
**characterized in that**,
the maximum light intensity of the third step (Bc) is about 130 to 200 mW/cm².

12. Device according to any of claims 8 to 11,
**characterized in that**,
the control unit (13) controls the light intensity output from the light source (2) in dependence upon the control data input via the input unit (10a, 10b).

13. Device according to any of claims 8 to 12,
**characterized in that**,
the control unit (13) makes possible irradiation in different, predetermined irradiation modes (A, B, C).

14. Device according to claim 13,
**characterized in that**,
the control unit (13) makes possible irradiation in three different modes (A, B, C), namely a first mode (A) with constant low light intensity, a second mode (B) with continuously or step-wise increasing light intensity and a third mode (C) with constant high light intensity.

15. Device according to claim 13 or 14,
**characterized in that**,
the irradiation mode (A, B, C) is selectable by the user via the input unit (10b).

16. Device according to any of claims 13 to 15,
**characterized in that**,
the device has a display unit (11) for displaying the irradiation mode (A, B, C) selected by the user.

17. Device according to any of claims 8 to 16,
**characterized in that**,
the device has a detector coupled to the light irradiation which measures the light intensity and delivers a corresponding electrical signal to a regulation unit which for its part holds constant the light intensity corresponding to the received measurement signal.

18. Device according to any of claims 8 to 17,
**characterized in that**,
the device has a further light source for a pilot light beam for aiming the light beam output from the light source (2).

19. Device according to any of claims 8 to 17,
**characterized in that**,
the light intensity output from the light source (2) is controllable by means of the control unit (13) before the irradiation procedure to about 5 to 10% of the maximum light intensity.

## Revendications

1. Procédé de durcissement de compositions polymères sensibles à la lumière, dans lequel une composition polymère est irradiée de lumière dont la longueur d'onde est adaptée à la composition polymère et se situe dans la plage de 400 à 500 nm,
**caractérisé en ce que**
l'irradiation est réalisée avec une intensité lumineuse augmentant en continu ou par paliers,
et **en ce que** la durée d'irradiation est fixée avant l'opération d'irradiation à l'aide d'une unité de saisie (10a).

2. Procédé selon la revendication 1,
**caractérisé en ce que**
l'irradiation est réalisée en trois étapes directement consécutives (Ba, Bb, Bc) avec une intensité lumineuse croissante, la durée de l'irradiation de la première étape (Ba) pouvant atteindre 75% environ, celle de la deuxième étape (Bb) 30% environ et celle de la troisième étape (Bc) le temps restant de la durée d'irradiation totale.

3. Procédé selon la revendication 1 ou 2,
**caractérisé en ce que**
l'irradiation est réalisée en trois étapes directement consécutives (Ba, Bb, Bc) avec une intensité lumineuse croissante, la durée de l'irradiation de la première étape (Ba) pouvant atteindre 30-60% environ, celle de la deuxième étape (Bb) 50-90% environ de l'intensité lumineuse maximale de la troisième étape (Bc).

4. Procédé selon la revendication 3,
**caractérisé en ce que**
l'intensité lumineuse maximale de la troisième étape (Bc) est d'environ 130 à 200 mW/cm².

5. Procédé selon l'une quelconque des revendications précédentes,
**caractérisé en ce que**
le faisceau de lumière est orienté à l'aide d'un faisceau lumineux pilote avant l'opération d'irradiation.

6. Procédé selon la revendication 5,
**caractérisé en ce que**
le faisceau lumineux pilote est produit par un faisceau lumineux équivalent à 5 à 10% environ de l'intensité lumineuse maximale.

7. Procédé selon la revendication 5 ou 6,
**caractérisé en ce que**
le faisceau lumineux pilote est produit par une source lumineuse supplémentaire de l'appareil d'irradiation.

8. Dispositif de réalisation du procédé selon l'une quelconque des revendications précédentes,
avec une source lumineuse (2),
avec une optique à fibres optiques (4, 5) pour guider la lumière délivrée par la source lumineuse (2),
avec une unité de commande (13) pour commander la commande de la puissance lumineuse délivrée par la source lumineuse (2) et
avec un système de filtre spectral (7) qui est transparent pour une longueur d'onde de la lumière de la source lumineuse (2) entre 400 et 550 nm,
**caractérisé en ce que**
l'intensité lumineuse délivrée par la source lumineuse (2) peut être augmentée en continu ou par paliers par l'unité de commande (13) lors d'une opération d'irradiation,
et **en ce qu'**une unité de saisie (10a) est prévue pour saisir des données de commande qui définissent la durée de l'irradiation.

9. Dispositif selon la revendication 8,
**caractérisé en ce que**
l'intensité lumineuse délivrée par la source lumineuse (2) peut être augmentée par l'unité de commande (13) en trois étapes directement consécutives (Ba, Bb, Bc), la durée de l'irradiation de la première étape (Ba) pouvant atteindre 75% environ, celle de la deuxième étape (Bb) 30% environ et celle de la troisième étape (Bc) le temps restant de la durée d'irradiation totale.

10. Dispositif selon la revendication 8 ou 9,
**caractérisé en ce que**
l'intensité lumineuse délivrée par la source lumineuse (2) peut être augmentée par l'unité de commande (13) en trois étapes directement consécutives (Ba, Bb, Bc), l'intensité lumineuse de la première étape (Ba) pouvant atteindre 30-60% environ, celle de la deuxième étape (Bb) 50-90% environ de l'intensité lumineuse maximale de la troisième étape (Bc).

11. Dispositif selon la revendication 10,
**caractérisé en ce que**
l'intensité lumineuse maximale de la troisième étape (Bc) est d'environ 130 à 200 mW/cm².

12. Dispositif selon l'une quelconque des revendications 8 à 11,
**caractérisé en ce que**
l'unité de commande (13) commande l'intensité lumineuse délivrée par la source lumineuse (2) en fonction des données de commande saisies par l'intermédiaire de l'unité de saisie (10a, 10b).

13. Dispositif selon l'une quelconque des revendications 8 à 12,
**caractérisé en ce que**
l'unité de commande (13) permet l'irradiation dans différents modes d'irradiation prédéfinis (A, B, C).

14. Dispositif selon la revendication 13,
**caractérisé en ce que**
l'unité de commande (13) permet l'irradiation dans trois modes différents (A, B, C), à savoir dans un premier mode (A) avec une intensité lumineuse faible constante, un second mode (B) avec une intensité lumineuse augmentée en continu ou par paliers et un troisième mode (C) avec une intensité lumineuse élevée constante.

15. Dispositif selon la revendication 13 ou 14,
**caractérisé en ce que**
l'unité de saisie (10b) permet à l'utilisateur de sélectionner le mode d'irradiation (A, B, C).

16. Dispositif selon l'une quelconque des revendications 13 à 15,
**caractérisé en ce que**
le dispositif présente une unité d'affichage (11) pour afficher le mode d'irradiation (A, B, C) fixé par l'utilisateur.

17. Dispositif selon l'une quelconque des revendications 8 à 16,
**caractérisé en ce que**
le dispositif présente un détecteur couplé au rayonnement lumineux qui mesure l'intensité lumineuse et fournit un signal électrique correspondant à une unité de réglage qui maintient de son côté l'intensité lumineuse constante conformément au signal de mesure enregistré.

18. Dispositif selon l'une quelconque des revendications 8 à 17,
**caractérisé en ce que**
le dispositif présente une autre source lumineuse pour un faisceau lumineux pilote pour orienter le faisceau lumineux délivré par la source lumineuse (2).

19. Dispositif selon l'une quelconque des revendications 8 à 17
**caractérisé en ce que**
l'intensité lumineuse délivrée par la source lumineuse (2) peut être commandée par l'unité de commande (13) à environ 5 à 10% de l'intensité lumineuse maximale avant l'opération d'irradiation.
